(19)

**Europäisches Patentamt**
**European Patent Office**
**Office européen des brevets**

(11) **EP 3 916 355 A1**

(12) **EUROPEAN PATENT APPLICATION**

(43) Date of publication:
**01.12.2021 Bulletin 2021/48**

(51) Int Cl.:
***G01C 21/20*** *(2006.01)*      ***G06K 9/00*** *(2006.01)*

(21) Application number: **20217451.2**

(22) Date of filing: **28.12.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2020   CN 202010463444**

(71) Applicant: **Beijing Baidu Netcom
Science and Technology Co., Ltd.
Beijing 100085 (CN)**

(72) Inventors:
• **CHEN, Sili
 Beijing, 100085 (CN)**
• **LIU, Zhaoliang
 Beijing, 100085 (CN)**

(74) Representative: **Romano, Giuseppe et al
Società Italiana Brevetti S.p.A
Piazza di Pietra, 39
00186 Roma (IT)**

(54) **METHOD AND APPARATUS FOR INDOOR LOCALIZATION, ELECTRONIC DEVICE, STORAGE MEDIUM AND COMPUTER PROGRAM**

(57)    The disclosure provides a method for indoor localization. The method includes the following. A first image position of a target feature point of a target object is obtained (S110) and an identifier of the target feature point is obtained, based on a first indoor image captured by a user. A three-dimensional (3D) spatial position of the target feature point through retrieval is obtained (S120) based on the identifier of the target feature point.

The 3D spatial position is pre-determined based on a second image position of the target feature point on a second indoor image, a posture of a camera for capturing the second indoor image, and a posture of the target object on the second indoor image. An indoor position of the user is determined (S130) based on the first image position of the target feature point and the 3D spatial position of the target feature point.

EP 3 916 355 A1

**Description**

**TECHNICAL FIELD**

The disclosure relates to a field of image processing technologies, especially a field of indoor navigation technologies, and more particular to, a method and an apparatus for indoor localization, a device and a storage medium.

**BACKGROUND**

Indoor localization refers to position acquirement of a collecting device in an indoor environment. Collecting devices generally refer to devices such as mobile phones and robots that carry sensors like cameras. Compared to outdoor localization, accurate position could not be obtained directly through satellite localization due to weak satellite signal in the indoor environment.
Indoor localization is also performed on a customer in a shopping mall and an indoor service robot to realize indoor navigation or make the indoor service robot work better in the indoor environment.

**SUMMARY**

Embodiments of the disclosure provide a method and an apparatus for indoor localization, a device and a storage medium.
In a first aspect, embodiments of the disclosure provide a method for indoor localization. The method includes: obtaining a first image position of a target feature point of a target object and obtaining an identifier of the target feature point, based on a first indoor image captured by a user; obtaining a three-dimensional (3D) spatial position of the target feature point through retrieval based on the identifier of the target feature point, in which the 3D spatial position is predetermined based on a second image position of the target feature point on a second indoor image, a posture of a camera for capturing the second indoor image, and a posture of the target object on the second indoor image; and determining an indoor position of the user based on the first image position of the target feature point and the 3D spatial position of the target feature point.
In a second aspect, embodiments of the disclosure provide an apparatus for indoor localization. The apparatus includes: an identifier obtaining module, a position obtaining module and a localization module.
The identifier obtaining module is configured to obtain a first image position of a target feature point of a target object and obtain an identifier of the target feature point, based on a first indoor image captured by a user.
The position obtaining module is configured to obtain a three-dimensional (3D) spatial position of the target feature point through retrieval based on the identifier of the target feature point, in which the 3D spatial position is predetermined based on a second image position of the target feature point on a second indoor image, a posture of a camera for capturing the second indoor image, and a posture of the target object on the second indoor image.
The localization module is configured to determine an indoor position of the user based on the first image position of the target feature point and the 3D spatial position of the target feature point.
In a third aspect, embodiments of the disclosure provide an electronic device. The electronic device includes: at least one processor, and a memory communicatively connected to the at least one processor. The memory stores instructions executable by the at least one processor, and when the instructions are executed by the at least one processor, the at least one processor is caused to implement a method for indoor localization as described above.
In a fourth aspect, embodiments of the disclosure provide a non-transitory computer-readable storage medium storing computer instructions. When the instructions are executed, the computer is caused to implement a method for indoor localization as described above.
In a fifth aspect, embodiments of the disclosure provide a computer program containing program instructions, when executed on a processor, causing the processor to implement a method for indoor localization as described above.
The technical solution of the embodiments of the disclosure improves automaticity and robustness of indoor localization.
It should be understood that the content described in this section is not intended to identify the key or important features of the embodiments of the disclosure, nor is it intended to limit the scope of the disclosure. Additional features of the disclosure will be easily understood by the following description.

**BRIEF DESCRIPTION OF THE DRAWINGS**

The drawings are used to better understand the solution and do not constitute a limitation to the disclosure, in which:

FIG. 1 is a flowchart of a method for indoor localization according to embodiments of the disclosure.

FIG. 2 is a flowchart of a method for indoor localization according to embodiments of the disclosure.

FIG. 3 is a flowchart of a method for indoor localization according to embodiments of the disclosure.

FIG. 4 is a flowchart of a method for indoor localization according to embodiments of the disclosure.

FIG. 5 is a schematic diagram of an apparatus for indoor localization according to embodiments of the disclosure.

FIG. 6 is a block diagram of an electronic device for implementing the method for indoor localization according to embodiments of the disclosure.

**DETAILED DESCRIPTION**

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

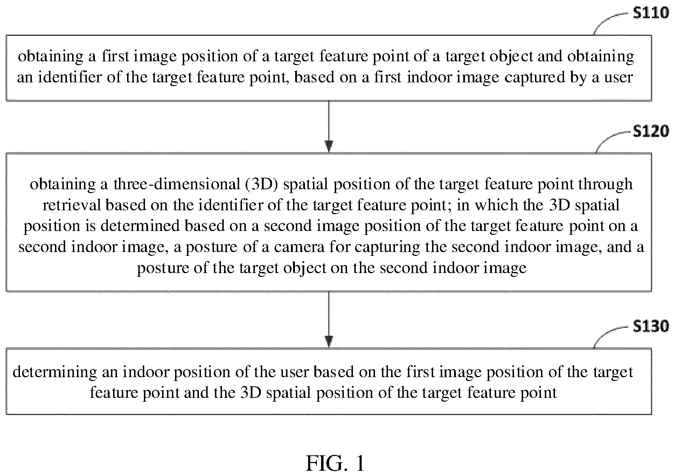

FIG. 1 is a flowchart of a method for indoor localization according to embodiments of the disclosure. Embodiments of the disclosure is applicable for indoor localization of a user based on an indoor environment image captured by the user. The method may be executed by an apparatus for indoor localization. The apparatus may be implemented by software and/or hardware. As illustrated in FIG. 1, the method for indoor localization according to embodiments of the disclosure may include the following.

At block S110, a first image position of a target feature point of a target object and an identifier of the target feature point are obtained based on a first indoor image captured by a user.

The first indoor image is an image captured by the user to be used for indoor localization.

The target object is an object on which performing the indoor localization is based. That is, based on the target object, the indoor localization is performed.

In some embodiments, the target object may be an object having obvious image features and has a high occurrence frequency in indoor scenes. That is, an object that is frequently presented in indoor scenes may be determined as the target object.

For example, the target object may be a painting, a signboard or a billboard.

The target feature point refers to a feature point on the target object.

In some embodiments, the target feature point may be at least one of a color feature point, a shape feature point and a texture feature point on the target object. For example, the target feature point may be only the color feature point, only the shape feature point, only the texture feature point, both the color feature point and the shape feature point, both the color feature point and the texture feature point, both the shape feature point and the texture feature point, and all the color feature point, the shape feature point and the texture feature point.

For example, in cases that the target object is a rectangular object, the target feature points may be four vertices of the rectangular object.

The first image position refers to a position of the target feature point on the first indoor image.

At block S120, a three-dimensional (3D) spatial position of the target feature point is obtained through retrieval based on the identifier of the target feature point.

The 3D spatial position of the target feature point may be understood as the position of the target feature point in an indoor space.

The 3D spatial position of the target feature point may be determined in advance based on a second image position of the target feature point on a second indoor image, a posture of a camera for capturing the second indoor image, and a posture of the target object including the target feature point on the second indoor image. The determined 3D spatial position may be stored for retrieve.

The second indoor image is a captured image of the indoor environment, and the second indoor image may be the same as or different from the first indoor image.

The second image position is a position of the feature point on the second indoor image.

The second image position of the target feature point on the second indoor image, the posture of the camera for capturing the second indoor image, and the posture of the target object on the second indoor image may be determined in advance or in real-time.

In some embodiments, the second image position may be obtained by detecting the target feature point of the second indoor image.

In some embodiments, the second image position may also be obtained by detecting the target feature point based on a template matching method or based on neural network, which is not limited in embodiments of the disclosure.

The posture of the camera for capturing the second indoor image may be obtained by obtaining camera parameters of the second indoor image.

In some embodiments, the posture of the camera for capturing the second indoor image may be further determined by generating point cloud data of the indoor environment based on the second indoor image, without acquiring the camera parameters.

In the process of converting the second indoor image into the point cloud data of the indoor environment based on a 3D reconstruction algorithm, the posture of the camera for capturing the second indoor image may be generated.

Determining the posture of the target object on the second indoor image may include performing trigonometric measurement on two adjacent frames of the second indoor image to obtain a measurement result; and performing plane equation fitting based on the measurement result, and describing the posture of the target object on the second indoor image by using the plane equation. That is, the posture of the target object on the second indoor image may be determined based on the plane equation, where the plane equation is obtained to describe the posture of the targe object on the second indoor image.

In some embodiments, the block of determining the 3D spatial position of the target feature point may be implemented in real time or in advance.

At block S130, an indoor position of the user is determined based on the first image position of the target feature point and the 3D spatial position of the target feature point.

The indoor position of the user refers to the position of the user in the indoor environment.

In some embodiments, determining the indoor position of the user based on the first image position of the target feature point and the 3D spatial position of the target feature point may include: determining a pose of the camera for capturing the first indoor image based on the first image position of the target feature point and the 3D spatial position of the target feature point; and determining the indoor position of the user based on the pose of the camera.

The pose of the camera for capturing the first indoor image is the indoor position of the user.

For example, in an application scenario of embodiments of the disclosure, the user may be lost when visiting a mall or exhibition hall or participating in other indoor activities. In this case, the user may take a picture of the indoor environment through a mobile phone. The user may be automatically positioned based on the captured picture of the indoor environment and the method according to embodiments of the disclosure.

With the technical solution of embodiments of the disclosure, the 3D spatial positions of feature points are determined based on the second image positions of the feature points on the second indoor images, the postures of the camera for capturing the second indoor images, and the postures of the objects including the feature points on the second indoor images, to realize automatic determination of the 3D spatial position of the target feature point. Further, the indoor position of the user is determined based on the first image position of the target feature point and the 3D spatial position of the target feature point, thereby improving the automaticity of indoor localization.

In addition, since the feature points of the target object are less affected by external factors such as illumination, the robustness of the method is high.

In some embodiments, determining the indoor position of the user based on the first image position of the target feature point and the 3D spatial position of the target feature point may include: determining a pose of the camera for capturing the first indoor image based on the first image position of the target feature point and the 3D spatial position of the target feature point; and determining the indoor position of the user based on the pose of the camera.

The pose of the camera for capturing the first indoor image is the indoor position of the user.

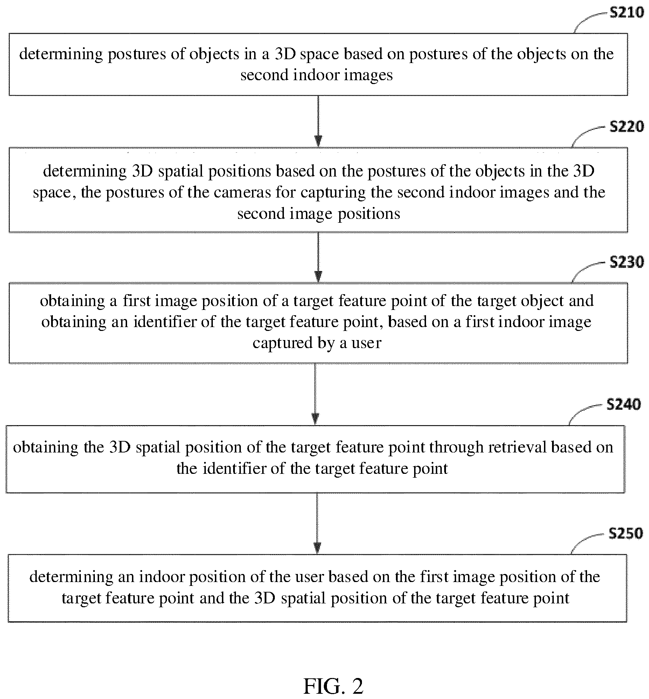

FIG. 2 is a flowchart of a method for indoor localization according to embodiments of the disclosure. In a case that the 3D spatial position of the target feature point is determined in advance, in the method of FIG. 1, determining the 3D spatial position of the target feature point based on the second image position of the target feature point on the second indoor image, the posture of the camera for capturing the second indoor image, and the posture of the target object on the second indoor image will be described in detail below. As illustrated in FIG. 2, the method for indoor localization according to embodiments of the disclosure may include the following.

At block S210, a posture of the target object in a 3D space is determined based on the posture of the target object on the second indoor image.

In some embodiments, the posture of the target object on the second indoor image may be described by the plane equation of the target object. Determining the posture of the target object in the 3D space based on the posture of the target object on the second indoor image may include: selecting a plane equation from at least one plane equation of the target object to describe the posture of the target object in the 3D space.

To improve the accuracy of the posture of the target object in the 3D space, determining the posture of the target object in the 3D space based on the posture of the target object on the second indoor image may include:

determining the posture of the target object in the 3D space based on the posture of the camera for capturing the second indoor image and at least one posture of the target object on the second indoor image.

That is, the plane equation of the target object is optimized based on the posture of the camera for capturing the second indoor image to obtain an optimized plane equation, and the optimized plane equation is used to describe the posture of the target object in the 3D space.

An algorithm for optimizing the plane equation may be any optimization algorithm. For example, the optimization algorithm may be a BundleAdjustment (BA) algorithm.

The process of using the BA algorithm to achieve plane optimization may include the following.

The posture of the target object in the space may be obtained through the BA algorithm by using the posture of the camera for capturing the second indoor image and at least one posture of the target object on the second indoor image as inputs.

At block S220, the 3D spatial position of the target feature point of the target object is determined based on the posture of the target object in the 3D space, the posture of the camera for capturing the second indoor image and the second image position.

In some embodiments, determining the 3D spatial position based on the posture of the target object in the 3D space, the posture of the camera for capturing the second indoor image and the second image position may include: determining a spatial characteristic parameter of a plane equation associated to the target object as information related to the posture of the target object in the 3D space; and determining the 3D spatial position of the target feature point based on the information related to the posture of the target object in the 3D space, the posture of the camera for capturing the second indoor image and the second image position.

The spatial characteristic parameter are constants for describing planar spatial features of the target object.

Generally, the plane equation is Ax + By + Cz + D = 0, where A, B, C and D are spatial characteristic parameters.

In some embodiments, coordinates of the 3D spatial position of the target feature point are obtained according to the following formulas:

$$n \times X + d = 0 \qquad\qquad (1) \ ;$$

and

$$X = R^{-1}(\mu \times x - t) \qquad\qquad (2) \ .$$

Equation (1) is the plane equation of the target object, which is used to describe the posture of the target object in the 3D space, where, n=(A, B, C), d= D, n and d are constants for describing the planar spatial features, X is the coordinates of the 3D spatial position of the target feature point, R and t are used to describe the posture of the camera for capturing the second indoor image, R is a rotation parameter, t is a translation parameter, x is the second image position, and $\mu$ is an auxiliary parameter.

At block S230, a first image position of a target feature point of a target object and an identifier of the target feature point are obtained based on a first indoor image captured by a user.

At block S240, a three-dimensional (3D) spatial position of the target feature point is obtained through retrieval based on the identifier of the target feature point.

At block S250, an indoor position of the user is determined based on the first image position of the target feature point and the 3D spatial position of the target feature point.

In some embodiments, the execution subject of blocks S210 and S220 may be the same as or different from the execution subject of blocks S230, S240, and S250.

With the technical solution according to embodiments of the disclosure, the posture of the target object in the 3D space is determined based on the posture of the target object on the second indoor image, thereby determining the posture of the target object in the 3D space.

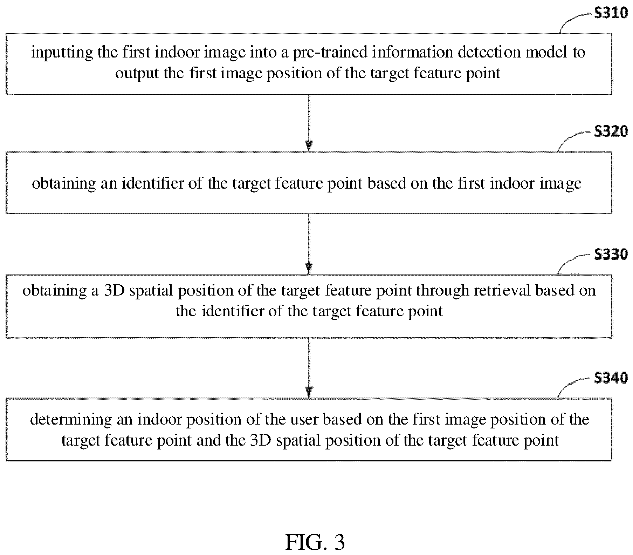

FIG. 3 is a flowchart of a method for indoor localization according to embodiments of the disclosure. In the method of FIGS 1 and 2, obtaining the first image position of the target feature point of the target object based on the first indoor image captured by the user may be described in detail below. As illustrated in FIG. 3, the method for indoor localization according to embodiments of the disclosure may include the following.

At block S310, the first indoor image is input into a pre-trained information detection model to output the first image position of the target feature point.

The target object is detected from an indoor sample image and the first image position of the target feature point of the target object is detected. An initial model is trained based on the indoor sample image and the first image position of the target feature point to obtain the information detection model.

The indoor sample image is a captured image of the indoor environment image, which may be the same as or different from the first indoor image.

In some embodiments, any target detection algorithm could be used to detect the target object.

For example, the target detection algorithm may be based on a template matching method or neural network.

In some embodiments, in a case that the target object has a target shape and is located on a wall, detecting the target object from the indoor sample image includes: determining a normal vector of each pixel of the indoor sample image in the 3D space; determining a wall mask of the indoor sample image based on a posture of a camera for capturing the indoor sample image and the normal vector of each pixel of the indoor sample image in the 3D space; detecting one or more objects having the target shape from the indoor sample image; and determining the target object from the objects having the target shape based on the wall mask.

The target shape could be free. To enable more objects in the indoor environment to be the target object, the target shape may be a rectangle.

The wall mask refers to an image used to cover a wall-related part of the indoor sample image.

In some embodiments, determining the wall mask of the indoor sample image based on the posture of the camera for capturing the indoor sample image and the normal vector of each pixel of the indoor sample image in the 3D space includes: determining a target pixel based on the posture of the camera for capturing the indoor sample image and the normal vector of each pixel of the indoor sample image in the 3D space, in which a normal vector of the target pixel is perpendicular to a direction of gravity; and determining the wall mask of the indoor sample image based on the target pixel.

Determining the wall mask of the indoor sample image based on the target pixel includes: determining an image composed of target pixels as the wall mask.

At block S320, an identifier of the target feature point is obtained based on the first indoor image captured by a user.

At block S330, a 3D spatial position of the target feature point is obtained through retrieval based on the identifier of the target feature point.

The 3D spatial position may be determined based on the second image position of the target feature point on the second indoor image, the posture of the camera for capturing the second indoor image, and the posture of the target object on the second indoor image.

In some embodiments, obtaining the identifier of the target feature point based on the first indoor image may include: inputting the first indoor image into the above information detection model to output the identifier of the target feature point.

At block S340, an indoor position of the user is determined based on the first image position of the target feature point and the 3D spatial position of the target feature point.

The execution sequence of blocks S310 and S320 is not limited in embodiments of the disclosure. For example, the block S320 may be executed prior to the block S310.

With the the technical solution according to embodiments of the disclosure, the model may be automatically obtained based on the training data. The training data may determine automatically the model. In addition, an automatically trained model is used to realize the automatic determination of the first image position of the target feature point.

In order to enlarge training samples, in a case that the target object is a planar object, training the initial model based on the indoor sample image and the first image position of the target feature point to obtain the information detection model includes: determining the target object as a foreground, and transforming the foreground to obtain a transformed foreground; determining a randomly-selected picture as a background; synthesizing the transformed foreground and the background to obtain at least one new sample image; generating a set of training samples based on the indoor sample image, the at least one new sample image, and the first image position of the target feature point; and training the initial model based on the set of training samples to obtain the information detection model.

The transformation of the foreground may be a transformation of the angle and/or the position of the target object. The transformation may be implemented based on affine transformation or projective transformation.

The picture may be a randomly selected or randomly generated picture.

The new sample image is obtained through synthesis.

Generating the set of training samples based on the indoor sample image, the at least one new sample image, and the first image position of the target feature point includes: determining the indoor sample image and the at least one new sample image as samples, and determining the first image position of the target feature point as a sample label to generate the set of training samples.

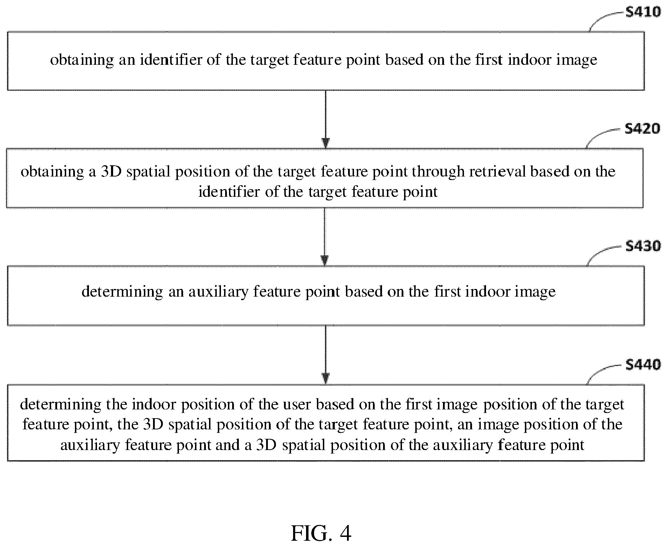

FIG. 4 is a flowchart of a method for indoor localization according to embodiments of the disclosure. In the method of FIGS. 1, 2 and 3, determining the indoor position of the user based on the first image position of the target feature point and the 3D spatial position of the target feature point may be described in detail below. As illustrated in FIG. 4, the method for indoor localization according to embodiments of the disclosure includes the following.

At block S410, a first image position of a target feature point of a target object and an identifier of the target feature point are obtained based on a first indoor image captured by a user.

At block S420, a 3D spatial position of the target feature point is obtained through retrieval based on the identifier of the target feature point.

A 3D spatial position of a feature point is determined based on a second image position of the feature point on a second indoor image, a posture of a camera for capturing the second indoor image, and a posture of an object including the feature point on the second indoor image.

At block S430, an auxiliary feature point is determined based on the first indoor image.

The auxiliary feature point is a feature point determined through other feature point detection methods. Other feature point detection methods are methods other than the target feature point detection method.

In some embodiments, determining the auxiliary feature point based on the first indoor image may include: generating point cloud data of an indoor environment based on the first indoor image, and determining a first feature point of a data point on the first indoor image; extracting a second feature point from the first indoor image; matching the first feature point and the second feature point; and determining the auxiliary feature point, the first feature point of the auxiliary feature point matching the second feature point of the auxiliary feature point.

For example, the second feature point is extracted from the first indoor image based on scale-invariant feature transform (SIFT) algorithm.

At block S440, the indoor position of the user is determined based on the first image position of the target feature point, the 3D spatial position of the target feature point, an image position of the auxiliary feature point and a 3D spatial position of the auxiliary feature point.

With the technical solution of embodiments of the disclosure, the localization result of the target feature point and the localization result of the auxiliary feature point are integrated, thereby improving the accuracy of the user's indoor position while ensuring the robustness of localization.

In order to further improve the accuracy of localization, the number of auxiliary feature points is greater than the number of target feature points, so as to utilize abundant auxiliary feature points to realize accurate localization of the user.

The technical solution according to embodiments of the disclosure may be described in detail below in cases that the target object is a planar rectangular object. For example, the planar rectangular object may be a painting, a signboard or a billboard. The method for indoor localization according to embodiments of the disclosure includes: a preprocessing portion and a real-time application portion.

The logic of the real-time application portion includes the following.

The point cloud data of an indoor environment is generated and the feature point of each data point on the first indoor image is determined based on the first indoor image captured by the user.

Feature points of the first indoor image are extracted.

The feature points extracted from the first indoor image are matched with the feature point of each data point in the point cloud data of the first indoor image.

Auxiliary feature points are determined, where feature points extracted to the first indoor image corresponding to the auxiliary feature points match the feature points of the data points corresponding to the auxiliary feature points.

The first indoor image is inputted to a pre-trained information detection model, to output an identifier of the target feature point of the target object and the first image position of the target feature point.

The 3D spatial position corresponding to the target feature point is determined from prestored data through retrieval based on the identifier of the target feature point.

The pose of the camera for capturing the first indoor image is determined based on the first image position of the target feature point, the 3D spatial position of the target feature point, the image positions of the auxiliary feature points and the 3D spatial positions of the auxiliary feature points, to realize indoor localization of the user.

In the disclosure, a sequence of determining the auxiliary feature points and the target feature point is not limited. For example, the target feature point may be determined before determining the auxiliary feature points.

The logic of the preprocessing portion may include the following.

Indoor sample images are inputted into a pre-trained structure detection model, to output the normal vector of each pixel in the 3D space.

A target pixel with the normal vector perpendicular to a direction of gravity is determined based on the pose of the camera for capturing the indoor sample image and the normal vector of the pixel in the indoor sample image in the 3D space to obtain a wall mask of the indoor sample image.

The rectangular objects are detected from the indoor sample image based on a rectangular frame detection model.

Candidate objects located on the wall are obtained from the detected rectangular objects based on the wall mask.

Trigonometric measurement is performed on two adjacent frames of a sample image to obtain a measurement result.

Plane equation fitting is performed based on the measurement result to obtain a fitting result, to determine whether the candidate object is a planar object based on the fitting result.

In cases of the candidate object is a planar object, the candidate object is determined as the target object.

It is determined whether the detected target objects are a same object based on an image matching algorithm and the same target objects are labelled with the same mark.

The pose of the target object in the 3D space is determined based on the pose of the camera for capturing the indoor sample image and a pose of the target object on the indoor sample image.

The 3D spatial position of the target feature point is determined based on the pose of the target object in the 3D space, and a correspondence between the 3D spatial position and the identifier of the target feature point is stored.

Projective transformation is performed on the target object at different angles and positions to obtain new sample images.

The indoor sample image, the new sample images, the identifier of the target object, and a second image coordinate of the target feature point on the indoor sample image are used as a set of training samples.

An initial model is trained based on the set of training samples to obtain the information detection model.

Embodiments of the disclosure perform indoor localization by fusing the target feature points and the auxiliary feature points. Since the number of the auxiliary feature points is large, indoor localization based on the auxiliary feature points has high accuracy, but low robustness. Since the number of the target feature points is relatively small, the accuracy of indoor localization based on the target feature points is relatively low. However, since the feature points are less affected by indoor environmental factors, the robustness of the indoor localization based on the target feature points is relatively high. In embodiments of the disclosure, the fusion of the target feature points and the auxiliary feature points not only improves the accuracy of indoor localization, but also improves the robustness of indoor localization.

In addition, maintenance cost of the rectangular frame detection model in embodiments of the disclosure is lower than that of other target object detection models. Other target object detection models need to manually collect and label data for training when adding object categories. In the disclosure, since the rectangular frame detection model realizes the detection of a type of object with a rectangular shape, there is no need to retrain the model when other types of rectangular objects are added, thereby greatly reducing the maintenance cost of the model.

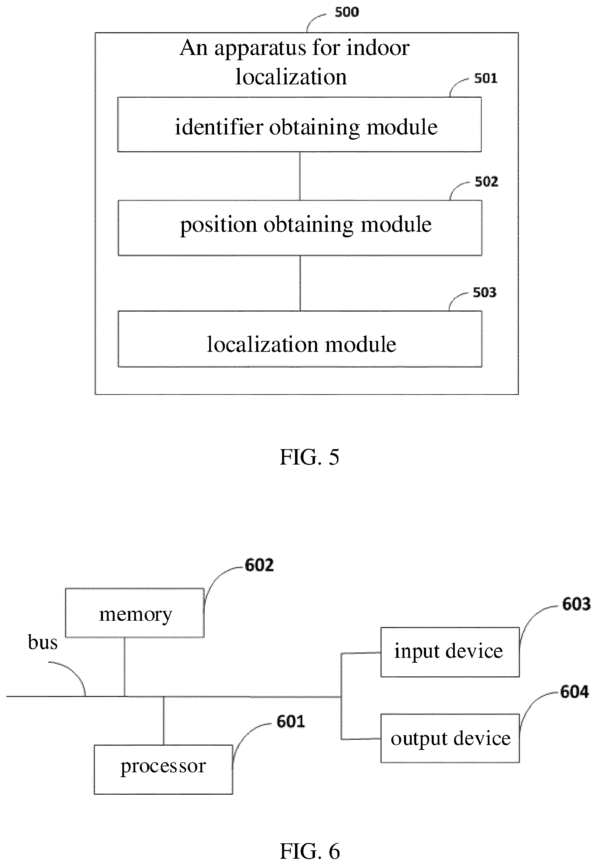

FIG. 5 is a schematic diagram of an apparatus for indoor localization according to embodiments of the disclosure. As illustrated in FIG. 5, the apparatus for indoor localization 500 according to embodiments of the disclosure includes: an identifier obtaining module 501, a position obtaining module 502 and a localization module 503.

The identifier obtaining module 501 is configured to obtain a first image position of a target feature point of a target object and obtain an identifier of the target feature point, based on a first indoor image captured by a user.

The position obtaining module 502 is configured to obtain a three-dimensional (3D) spatial position of the target feature point through retrieval based on the identifier of the target feature point, in which the 3D spatial position is pre-determined based on a second image position of the target feature point on a second indoor image, a posture of a camera for capturing the second indoor image, and a posture of the target object on the second indoor image.

The localization module 503 is configured to determine an indoor position of the user based on the first image position of the target feature point and the 3D spatial position of the target feature point.

In the technical solution of the disclosure, the 3D spatial position is pre-determined based on the second image position of the target feature point on the second indoor image, the posture of the camera for capturing the second indoor image, and the posture of the target object on the second indoor image. Furthermore, the indoor position of the user is determined according to the first image position of the target feature point and the 3D spatial position of the target feature point, thereby improving the automaticity of indoor localization. In addition, since the feature points of the target object are less affected by external factors such as illumination, the robustness of the method is high.

Moreover, the apparatus further includes: a posture determining nodule and a position determining nodule.

The posture determining nodule is configured to determine a posture of the target object in a 3D space based on the posture of the target object on the second indoor image before obtaining the 3D spatial position through retrieval based on the identifier of the target feature point.

The position determining nodule is configured to determine the 3D spatial position based on the posture of the target object in the 3D space, the posture of the camera for capturing the second indoor image and the second image position.

The position determining module further includes: an information determining unit and a position determining unit.

The information determining unit is configured to determine a spatial characteristic parameter of a plane equation associated to the target object as information related to the posture of the target object in the 3D space.

The position determining unit is configured to determine the 3D spatial position based on the information related to the posture of the target object in the 3D space, the posture of the camera for capturing the second indoor image and the second image position.

The posture determining module further includes: a posture determining unit, configured to determine the posture of the target object in the 3D space based on the posture of the camera for capturing the second indoor image and at least one posture of the target object on the second indoor image.

The position determining module further includes: a position obtaining unit, configured to input the first indoor image into a pre-trained information detection model to output the first image position of the target feature point.

The information detection model is constructed by: detecting the target object from an indoor sample image and detecting the first image position of the target feature point of the target object; and training an initial model based on the indoor sample image and the first image position of the target feature point to obtain the information detection model.

In a case that the target object has a target shape and is located on a wall, the position determining unit includes: a vector determining subunit, a wall mask determining subunit, an object detecting subunit and an object determining subunit.

The vector determining subunit is configured to determine a normal vector of each pixel of the indoor sample image in the 3D space.

The wall mask determining subunit is configured to determine a wall mask of the indoor sample image based on a posture of a camera for capturing the indoor sample image and the normal vector of each pixel of the indoor sample image in the 3D space.

The object detecting subunit is configured to detect one or more objects having the target shape from the indoor sample image.

The object determining subunit is configured to determine the target object from the objects having the target shape based on the wall mask.

The wall mask determining subunit is configured to: determine a target pixel based on the posture of the camera for capturing the indoor sample image and the normal vector of each pixel of the indoor sample image in the 3D space, in which a normal vector of the target pixel is perpendicular to a direction of gravity; and determine the wall mask of the indoor sample image based on the target pixel.

In a case that the target object is a planar object, the object determining subunit includes: a candidate selector, a planar determining device and a target selector.

The candidate selector is configured to determine a candidate object located on the wall from the objects having the target shape.

The planar determining device is configured to determine whether the candidate object is the planar object based on two adjacent frames of indoor sample image.

The target selector is configured to determine the candidate object as the target object in response to determining that the candidate object is a planar object.

The planar determining device is configured to: perform trigonometric measurement on the two adjacent frames of indoor sample image to obtain a measurement result; perform plane equation fitting based on the measurement result to obtain a fitting result; and determine whether the candidate object is a planar object based on the fitting result.

In a case that the target object is a planar object, the position obtaining unit includes: a transforming subunit, a synthesizing subunit, a sample set constructing subunit and a model training subunit.

The transforming subunit is configured to determine the target object as a foreground, and transform the foreground to obtain a transformed foreground.

The synthesizing subunit is configured to determine a randomly-selected picture as a background, synthesize the transformed foreground and the background to obtain at least one new sample image.

The sample set constructing subunit is configured to generate a set of training samples based on the indoor sample image, the at least one new sample image, and the first image position of the target feature point.

The model training subunit is configured to train the initial model based on the set of training samples to obtain the information detection model.

The localization module includes: a feature point determining unit and a localization unit.

The feature point determining unit is configured to determine an auxiliary feature point based on the first indoor image.

The localization unit is configured to determine the indoor position of the user based on the first image position of the target feature point, the 3D spatial position of the target feature point, an image position of the auxiliary feature point and a 3D spatial position of the auxiliary feature point.

The feature point determining unit includes: a point cloud generating subunit, a feature point extracting subunit, a feature point matching subunit and a feature point determining subunit.

The point cloud generating subunit is configured to generate point cloud data of an indoor environment based on the first indoor image, and determine a first feature point of a data point on the first indoor image.

The feature point extracting subunit is configured to extract a second feature point from the first indoor image.

The feature point matching subunit is configured to match the first feature point and the second feature point.

The feature point determining subunit is configured to determine a feature point as the auxiliary feature point, the first feature point of the feature point matching the second feature point of the feature point.

The localization module includes: a pose determining unit and a localization unit.

The pose determining unit is configured to determine a pose of the camera for capturing the first indoor image based on the first image position of the target feature point and the 3D spatial position of the target feature point.

The localization unit is configured to determine the indoor position of the user based on the pose of the camera.

Embodiments of the disclosure provide a computer program containing program instructions, when executed on a processor, causing the processor to implement a method for indoor localization as described above.

According to the embodiments of the present disclosure, the disclosure also provides an electronic device and a readable storage medium.

FIG. 6 is a block diagram of an electronic device for implementing the method for indoor localization according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 602 is configured to store non-transitory software programs, non-transitory computer executable programs and modules, such as program instructions/modules (for example, the identifier obtaining module 501, the position obtaining module 502, and the localization module 503 shown in FIG. 5) corresponding to the method in the embodiment of the present disclosure. The processor 601 executes various functional applications and data processing of the server by running non-transitory software programs, instructions, and modules stored in the memory 602, that is, implementing the method in the foregoing method embodiments.

The memory 602 may include a storage program area and a storage data area, where the storage program area may store an operating system and application programs required for at least one function. The storage data area may store data created according to the use of the electronic device for implementing the method. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

The technical solution of the embodiment of the disclosure improve the automaticity and robustness of indoor localization. It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the present disclosure. Those skilled in the art should understand that various modifications, combinations, sub-combinations and substitutions can be made according to design requirements and other factors.

**Claims**

1. A method for indoor localization, comprising:

   obtaining (S110; S230) a first image position of a target feature point of a target object and obtaining (S320; S410) an identifier of the target feature point, based on a first indoor image captured by a user;
   obtaining (S120; S240; S330; S420) a three-dimensional (3D) spatial position of the target feature point through retrieval based on the identifier of the target feature point; wherein the 3D spatial position is determined based on a second image position of the target feature point on a second indoor image, a posture of a camera for capturing the second indoor image, and a posture of the target object on the second indoor image; and
   determining (S130; S250; S340) an indoor position of the user based on the first image position of the target feature point and the 3D spatial position of the target feature point.

2. The method according to claim 1, further comprising:

   determining a posture of the target object in a 3D space based on the posture of the target object on the second indoor image; and
   determining the 3D spatial position based on the posture of the target object in the 3D space, the posture of the camera for capturing the second indoor image and the second image position.

3. The method according to claim 2, wherein determining (S220) the 3D spatial position based on the posture of the target object in the 3D space, the posture of the camera for capturing the second indoor image and the second image position comprises:

> determining a spatial characteristic parameter of a plane equation associated to the target object as information related to the posture of the target object in the 3D space; and
> determining the 3D spatial position based on the information related to the posture of the target object in the 3D space, the posture of the camera for capturing the second indoor image and the second image position.

4. The method according to claim 2, wherein determining the posture of the target object in the 3D space based on the posture of the target object on the second indoor image comprises:
determining the posture of the target object in the 3D space based on the posture of the camera for capturing the second indoor image and at least one posture of the target object on the second indoor image.

5. The method according to any one of claims 1 to 4, wherein obtaining (S110; S230) the first image position of the target feature point of the target object based on the first indoor image captured by the user comprises:

> inputting (S310) the first indoor image into a pre-trained information detection model to output the first image position of the target feature point;
> wherein the information detection model is generated by:

>> detecting the target object from an indoor sample image and detecting the first image position of the target feature point of the target object; and
>> training an initial model based on the indoor sample image and the first image position of the target feature point to obtain the information detection model.

6. The method according to claim 5, wherein, in a case that the target object has a target shape and is located on a wall, detecting the target object from the indoor sample image comprises:

> determining a normal vector of each pixel of the indoor sample image in the 3D space;
> determining a wall mask of the indoor sample image based on a posture of a camera for capturing the indoor sample image and the normal vector of each pixel of the indoor sample image in the 3D space;
> detecting one or more objects having the target shape from the indoor sample image; and
> determining the target object from the objects having the target shape based on the wall mask.

7. The method according to claim 6, wherein determining the wall mask of the indoor sample image based on the posture of the camera for capturing the indoor sample image and the normal vector of each pixel of the indoor sample image in the 3D space comprises:

> determining a target pixel based on the posture of the camera for capturing the indoor sample image and the normal vector of each pixel of the indoor sample image in the 3D space, wherein a normal vector of the target pixel is perpendicular to a direction of gravity; and
> determining the wall mask of the indoor sample image based on the target pixel.

8. The method according to claim 6, wherein, in a case that the target object is a planar object, determining the target object from the objects having the target shape based on the wall mark comprises:

> determining a candidate object located on the wall from the objects having the target shape;
> determining whether the candidate object is the planar object based on two adjacent frames of indoor sample image; and
> determining the candidate object as the target object in response to determining that the candidate object is a planar object.

9. The method according to claim 5, wherein in a case that the target object is a planar object, training the initial model based on the indoor sample image and the first image position of the target feature point to obtain the information detection model comprises:

> determining the target object as a foreground, and transforming the foreground to obtain a transformed foreground;

determining a randomly-selected picture as a background,
synthesizing the transformed foreground and the background to obtain at least one new sample image;
generating a set of training samples based on the indoor sample image, the at least one new sample image, and the first image position of the target feature point; and
training the initial model based on the set of training samples to obtain the information detection model.

10. The method according to any one of claims 1 to 4, wherein determining (S130; S250; S340) the indoor position of the user based on the first image position of the target feature point and the 3D spatial position of the target feature point comprises:

determining (S430) an auxiliary feature point based on the first indoor image; and
determining (S440) the indoor position of the user based on the first image position of the target feature point, the 3D spatial position of the target feature point, an image position of the auxiliary feature point and a 3D spatial position of the auxiliary feature point.

11. The method according to claim 10, wherein determining the auxiliary feature point based on the first indoor image comprises:

generating point cloud data of an indoor environment based on the first indoor image, and determining a first feature point of a data point on the first indoor image;
extracting a second feature point from the first indoor image;
matching the first feature point and the second feature point; and
determining the auxiliary feature point, the first feature point of the auxiliary feature point matching the second feature point of the auxiliary feature point.

12. An apparatus (500) for indoor localization, comprising:

an identifier obtaining module (501), configured to obtain a first image position of a target feature point of a target object and obtain an identifier of the target feature point, based on a first indoor image captured by a user;
a position obtaining module (502), configured to obtain a three-dimensional (3D) spatial position of the target feature point through retrieval based on the identifier of the target feature point; wherein the 3D spatial position is pre-determined based on a second image position of the target feature point on a second indoor image, a posture of a camera for capturing the second indoor image, and a posture of the target object on the second indoor image; and
a localization module (503), configured to determine an indoor position of the user based on the first image position of the target feature point and the 3D spatial position of the target feature point.

13. An electronic device, comprising:

at least one processor; and
a memory communicatively connected to the at least one processor; wherein,
the memory stores instructions executable by the at least one processor, and when the instructions are executed by the at least one processor, the at least one processor is caused to implement the method according to any one of claims 1 to 12.

14. A non-transitory computer-readable storage medium storing computer instructions, wherein the computer instructions are used to cause the computer to implement the method according to any one of claims 1 to 12.

15. A computer program containing program instructions, when executed on a processor, causing the processor to implement a method for indoor localization of any one of claims 1 to 12.

S110

obtaining a first image position of a target feature point of a target object and obtaining an identifier of the target feature point, based on a first indoor image captured by a user

S120

obtaining a three-dimensional (3D) spatial position of the target feature point through retrieval based on the identifier of the target feature point; in which the 3D spatial position is determined based on a second image position of the target feature point on a second indoor image, a posture of a camera for capturing the second indoor image, and a posture of the target object on the second indoor image

S130

determining an indoor position of the user based on the first image position of the target feature point and the 3D spatial position of the target feature point

FIG. 1

S210

determining postures of objects in a 3D space based on postures of the objects on the second indoor images

S220

determining 3D spatial positions based on the postures of the objects in the 3D space, the postures of the cameras for capturing the second indoor images and the second image positions

S230

obtaining a first image position of a target feature point of the target object and obtaining an identifier of the target feature point, based on a first indoor image captured by a user

S240

obtaining the 3D spatial position of the target feature point through retrieval based on the identifier of the target feature point

S250

determining an indoor position of the user based on the first image position of the target feature point and the 3D spatial position of the target feature point

FIG. 2

S310

inputting the first indoor image into a pre-trained information detection model to output the first image position of the target feature point

S320

obtaining an identifier of the target feature point based on the first indoor image

S330

obtaining a 3D spatial position of the target feature point through retrieval based on the identifier of the target feature point

S340

determining an indoor position of the user based on the first image position of the target feature point and the 3D spatial position of the target feature point

FIG. 3

S410

obtaining an identifier of the target feature point based on the first indoor image

S420

obtaining a 3D spatial position of the target feature point through retrieval based on the identifier of the target feature point

S430

determining an auxiliary feature point based on the first indoor image

S440

determining the indoor position of the user based on the first image position of the target feature point, the 3D spatial position of the target feature point, an image position of the auxiliary feature point and a 3D spatial position of the auxiliary feature point

FIG. 4

FIG. 5

FIG. 6

Europäisches
Patentamt

European
Patent Office

Office européen
des brevets

# EUROPEAN SEARCH REPORT

Application Number

EP 20 21 7451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 199 564 A (ACAD OF OPTO-ELECTRONICS CHINESE ACAD OF SCIENCES) 26 May 2020 (2020-05-26) * claims 1,2 * | 1-15 | INV. G01C21/20 G06K9/00 |

-----

TECHNICAL FIELDS
SEARCHED (IPC)

G01C
G06K

The present search report has been drawn up for all claims

| Place of search | Date of completion of the search | Examiner |
|---|---|---|
| The Hague | 15 June 2021 | Chapple, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 7451

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2021

| Patent document cited in search report | Publication date | Patent family member(s) | Publication date |
|---|---|---|---|
| CN 111199564 A | 26-05-2020 | NONE | |

For more details about this annex : see Official Journal of the European Patent Office, No. 12/82

EPO FORM P0459